# EUROPÄISCHE PATENTSCHRIFT

(11) **EP 3 974 153 B1**
(45) Veröffentlichungstag und Bekanntmachung des Hinweises auf die Patenterteilung: **01.11.2023**
(21) Anmeldenummer: 21192410.5
(22) Anmeldetag: 20.08.2021
(51) Int. Cl.: B29C 51/08, B29C 51/10, B29C 51/26, B29C 49/42, B29C 51/30, B29K 67/00, B29K 23/00, B29L 31/00

(54) **VERFAHREN ZUM CODIEREN EINES BEHÄLTERS UND CODIERTER BEHÄLTER**
CODED CONTAINER AND METHOD FOR CODING A CONTAINER
PROCÉDÉ DE CODAGE D'UN RÉCIPIENT ET RÉCIPIENT CODÉ

(30) Priorität: 28.09.2020 DE 102020125230
(43) Veröffentlichungstag der Anmeldung: 30.03.2022
(73) Patentinhaber: PACCOR Packaging GmbH, 40468 Düsseldorf (DE)
(72) Erfinder: SCHÜTTE, Andreas, 40667 Meerbusch (DE); RULAND, Helmut, 50189 Elsdorf (DE); LORENZ, Nicolas, 82319 Starnberg (DE)
(74) Vertreter: Hannke, Christian

(56) Entgegenhaltungen:
- EP-A1- 3 305 498
- WO-A1-2021/167971
- DE-A1-102010 023 098
- DE-A1-102011 082 011
- DE-U1-202018 107 348
- US-A- 5 366 791
- US-A1- 2005 067 727
- US-A1- 2019 306 385

## Beschreibung

Die Erfindung betrifft ein Verfahren zum Codieren eines Behälters und codierter Behälter. Gattungsgemäse Verfahren sind in den Patentschriften US2019/306385A1, DE102010023098A1, DE102011082011A1, DE202018107348U1, US5366791A und EP3305498A1 beschrieben.

Behälter, insbesondere Verpackungsbehälter oder zugehörige Bestandteile, wie ein Deckel, aus kunststoff- und/oder papierbasierenden Materialzusammensetzungen, sind in vielfältiger Weise bekannt. Häufig werden derartige Behälter für die Aufbewahrung von Konsumgütern, wie Lebensmittel, Waschmittel etc. verwendet. Beispielsweise sind Fertigmahlzeiten in derartigen Behältern aus formstabilem Material untergebracht.

Um derartige Verpackungsbehälter und deren dazugehörige Bestandteile mit einem Code zu versehen, der gewisse Informationen enthält, sind bisher häufig Aufkleber verwendet worden. Alternativ ist ein Bedrucken des Verpackungsbehälters mit einem Barcode bekannt. Derartige Barcodes müssen mittels eines separaten Aufklebers oder mit einem den Verpackungsbehälter umgebenden Papierband nachträglich, also nach beispielsweise einem Tiefziehvorgang des Kunststoffmaterials oder einem Spritzgießvorgang, an dem Verpackungsbehälter angebracht werden. Dies ist in der Regel aufwendig, da im Falle eines Druckverfahrens die seitlichen Wände bereits ihre Endausrichtung haben oder eine runde Oberfläche aufweisen. Alternativ kann ein Bedrucken vor der Formgebung, also vor einem formbildenden Prozess zur Bildung des dreidimensionalen Verpackungsbehälters oder des zugehörigen Bestandteiles stattfinden, jedoch birgt dies die Gefahr, dass die bedruckte Fläche während des formgebenden Prozesses zur Herstellung des dreidimensionalen Verpackungsbehälters beschädigt wird. Beispielsweise würde bei einem Tiefziehverfahren bei dem Hineinziehen eines mittleren Abschnittes eines folienförmigen Kunststoffmaterials in die Werkzeugform ein Umformprozess im Kantenbereich, also im Übergang von der späteren Bodenfläche des Verpackungsbehälters zu den seitlichen Wandelementen stattfinden. Dieser Umformprozess hat häufig eine Umformung im Kantenbereich beim Übergang von der Bodenfläche zu den Wandelementen um bis zu 90° zur Folge, wobei eine faltenfreie und glatte Umformung vorliegen sollte. Bedingt durch das jeweils verwendete Material und der Verwendung einer Negativ- bzw. Positiv-Werkzeugform aus beständigem Material, wie beispielsweise Metall, besteht somit die Gefahr einer Oberflächenveränderung im Bereich des späteren seitlichen Wandelementes des Verpackungsbehälters, der beispielsweise für das Anbieten von Fertigsalaten, kalten Fertiggerichten, Gemüsezusammensetzungen etc. verwendet wird.

Jedoch sind derartige Codierungen bzw. Barcodes sehr erwünscht, um ein schnelles Bezahlen durch Auslesen der Barcodes zu ermöglichen. Zudem sind derartige Barcodes nur an einer bestimmten Position für den gesamten Verpackungsbehälter mit dem sich darin befindenden Gericht und dem dazugehörigen Deckel wiederzufinden, sodass die Kassiererin diese Position zunächst finden muss und anschließend unter den Barcodescanner halten muss. Hierfür ist eventuell auch ein Verkippen des Gerichtes bzw. der Mahlzeit zusammen mit dem Verpackungsbehälter notwendig. Dies ist in der Regel nicht gewünscht. Zudem können aufgebrachte Barcodes in Form von Etiketten, Labeln oder Banderolen durch Deformierung oder Abreißen eine Identifizierung erschweren und/oder unmöglich machen.

Hinzu kommt, dass derartige Verpackungsbehälter aus Kunststoffmaterialien zunehmend ein Umweltproblem darstellen, da sie häufig nicht einem gezielten Recyclingkreislauf unterworfen sind. Abhängig von dem jeweiligen Land und den dazugehörigen Umweltauflagen, insbesondere Müllrecyclingauflagen, finden deshalb derartige Behälter vielleicht noch den Weg in eine praktizierte Mülltrennung, jedoch nicht den Weg zu einem geregelten Recyclingkreislauf, bei dem speziell dieses Material von der jeweiligen Herstellerfirma, aus dem der Verpackungsbehälter hergestellt ist, einem Recyclingvorgang für die Erschaffung neuer Behälter zugeordnet wird. Beispiele für derartige rigide bzw. steife und formstabile Kunststoffmaterialien sind HDPE, PE, PET, PP, rPET, r-PP, r-PE.

Ein weiterer Nachteil bei der Codierung von Verpackungsbehältern in der bisherigen Form besteht darin, dass bei der Verwendung von Aufklebern für die Aufbringung eines Barcodes diese überklebt werden können oder sogar ausgetauscht werden können. Dies ist ebenso nicht erwünscht, da ein schnelles Auslesen eines Preises und sonstige Daten von dieser Codierung nicht ermöglicht sind und gegebenenfalls beim Austauschen derartiger Barcodes ein Betrugsfall vorliegt.

Es besteht somit der Wunsch, jenseits von bisherigen Druckverfahren und Aufklebeverfahren die Anbringung eines oder mehrerer Codes auf einen Verpackungsbehälter zu ermöglichen. Somit ist es Aufgabe der Erfindung, ein Verfahren zur Herstellung und zur Codierung von Verpackungsbehältern aus kunststoff- und/oder papierbasierenden Materialien, vorzugsweise für die Lebensmittelaufbewahrung und/oder sonstiger Konsumgüter, sowie einen derartigen Verpackungsbehälter und dazugehörige Bestandteile, wie einen Deckel, zur Verfügung zu stellen, bei dem der Behälter, insbesondere der Verpackungsbehälter sowie dazugehörige Bestandteile, bereits bei der Herstellung zu einem permanenten Informationsträger werden, dessen Informationen auf schnelle und einfach Art gezielt für einen Rücklauf in einen Recyclingkreislauf und ohne Verwendung zusätzlicher Aufbringungs- bzw. Anbringungsmittel, ausgelesen werden können.

Diese Aufgabe wird verfahrensseitig durch die Merkmale des Anspruches 1 und erzeugnisseitig durch die Merkmale des Anspruches 10 gelöst.

Ein wesentlicher Punkt der Erfindung liegt darin, dass bei einem Verfahren zum Codieren eines formstabilen Verpackungsbehälters oder eines zugehörigen Bestandteils aus einer auf kunststoff- und/oder papierbasierenden Materialzusammensetzung während eines formbildenden Prozesses zur Bildung des dreidimensionalen Verpackungsbehälters oder des zugehörigen Bestandteils mit einer formgebenden Werkzeugform mindestens eine Außen- und/oder Innenseite an mindestens einer Position eine auf ihre erste Oberfläche einwirkende Formveränderungsbehandlung zur Herstellung mindestens eines dreidimensionalen Codes erfährt. Derartige Verpackungsbehälter sind vorzugsweise für die Aufbewahrung von Konsumgütern wie Lebensmittel, Waschmittel etc. geeignet.

Ein derartiges Verfahren zum Codieren ermöglicht durch die Anwendung einer Formveränderungsbehandlung an der Oberfläche der Außen- und/oder Innenseite eines Verpackungsbehälters die dauerhafte Einbringung eines Codes. Somit ist man nicht auf ein Druckverfahren oder ein Aufklebeverfahren angewiesen. Vielmehr wird erfindungsgemäß ein dreidimensionaler Code, wie ein Barcode oder ein QR-Code, in die Oberfläche des Verpackungsbehälters aus Kunststoffmaterial und/oder Papiermaterial derart eingebracht, dass an dieser Stelle die Oberfläche Vertiefungen aufweist. Ein Entfernen eines derart ausgestalteten Codes ist somit nicht ohne weiteres möglich und kann unter Beibehaltung der ursprünglichen Verpackungsbehälterform beispielsweise über die gesamte Außenfläche des Verpackungsbehälters verteilt sein, indem es sich an die Kontur des Verpackungsbehälters anpasst und während des Aufbringens durch eine entsprechende Berechnung verzerrt abhängig von der Geometrie des Verpackungsbehälters in einer wieder auslesbaren Form unter Verwendung der 3-D-Daten eines Verpackungsbehälters eingebracht wird. Alternativ kann natürlich eine Vielzahl von beispielsweise quadratisch ausgebildeten QR-Codes in Form von digitalen Wasserzeichen über die Oberfläche des Verpackungsbehälters verteilt angeordnet werden, sodass der Verpackungsbehälter vorteilhaft von jeder Seite aus auslesbar ist.

Derartige kunststoff- und/oder papierbasierende Materialzusammensetzungen, die beispielsweise folienförmige, flache Kunststoffmaterialien sein können, welche anschließend in einem Tiefziehvorgang zu dem eigentlichen dreidimensionalen Verpackungsbehälter geformt werden, weisen vor dem Stattfinden des eigentlichen formbildenden Prozesses noch keine Aufdrucke oder Aufkleber auf, da diese während eines derartigen, beispielsweise Tiefziehvorgangs, aufgrund des Nachuntenziehens und einer stattfindenden Umformung im Kantenbereich beim Übergang von der Bodenfläche zu den Wandelementen um bis zu 90° eine Beschädigung erfahren würden und somit nicht dauerhaft auf der Außenseite des Verpackungsbehälters in unbeschädigter Form vorhanden bleiben können. Viel mehr wird der Verpackungsbehälter während des Tiefziehens nicht nur in seiner endgültigen Form ausgebildet, sondern auch mit der bereits erwähnten Mehrzahl an Codes durch einen einzigen Tiefziehvorgang versehen.

Auch bei anderen Herstellungsverfahren von formstabilen Kunststoffverpackungen oder papierbasierenden Verpackungen, wie beispielsweise Spritzgießen und Blasformprozessen, ist eine Einbringung eines derartigen dreidimensionalen Codes in vorteilhafter Weise möglich und denkbar, sofern eine formgebende Werkzeugform verwendet wird, die dazu in der Lage ist, den dreidimensionalen Code in der Oberfläche einer Außen- und/oder Innenseite des Verpackungsbehälters einzuprägen.

Somit wird während des Herstellungsverfahrens eines Verpackungsbehälters aus formstabilem Material die bereits erwähnte Formveränderungsbehandlung zur Herstellung zumindest eines dreidimensionalen Codes nicht, wie bei den bedruckten Flächen, die Gefahr einer Verletzung der Druckoberfläche während eines formbildenden Prozesses zur Bildung des dreidimensionalen Verpackungsbehälters mit sich bringen. Auch ein nachträgliches Aufkleben von einem Code ist somit nicht mehr notwendig. Jedoch ist stattdessen eine Verteilung einer Vielzahl von identischen oder auch unterschiedlichen Codes auf den Oberflächen des Verpackungsbehälters somit möglich, sodass von jeder Seite aus dieser Code ausgelesen werden kann, auch wenn die Verpackung bereits in zerstörter Form auf einem Recyclingband liegt und von einem dort angeordneten Lesegerät zwecks Sortierung erkannt werden muss.

Ein für die mittels der Formveränderungsbehandlung stattfindende Herstellung von mindestens einem oder mehreren dreidimensionalen Codes erforderlicher vorausgehender Verfahrensschritt beinhaltet das Umwandeln von Daten von mindestens einem zuvor abgespeicherten zweidimensionalen Codemuster mittels einer Datenumwandlungseinrichtung in Daten eines dreidimensionalen Codemusters. Diese dreidimensionalen Codemuster werden mittels eines Lasergeräts in die zweiten Oberflächen, beispielsweise von Innenwänden und einer Bodenfläche der Werkzeugform oder darin anordenbarer Formeinsätze eingearbeitet. Dies trifft beispielsweise bei Tiefziehverfahren zu, wobei eine derartige Umsetzung bei Spritzgießverfahren und Blasformprozessen denkbar ist. Bei dieser sogenannten weiteren Formveränderungsbehandlung erhalten die zweiten Oberflächen Oberflächenvertiefungen und/oder - erhebungen in Form von kleinsten Punkten oder anderen kleinsten Querschnittsflächen. Alternativ zu dem Lasergerät können jegliche andere kontaktfreie Verarbeitungsverfahren angewendet werden, die eine Formveränderungsbehandlung an den Oberflächen von Außenflächen bzw. Innenflächen des dreidimensionalen Verpackungsbehälters oder dessen zugehörigen Bestandteile ermöglichen, da die Werkzeugform entsprechend durch diese Verfahren bzw. Geräte bearbeitet wird.

Es werden demzufolge Daten von beispielsweise einem zweidimensionalen Barcode, einem digitalen Wasserzeichen und/oder ein QR-Code derart umgewandelt, dass sie im dreidimensionalen Raum dargestellt werden können, um entsprechende Vertiefungen und Erhebungen an den Stellen auszubilden, wo zuvor helle und dunkle Flächenanteile des Codes in dem zweidimensionalen Codemuster vorlagen. Dies bedeutet beispielsweise, dass ein dunkler Punkt in einem zweidimensionalen Codemuster innerhalb einer seitlichen Innenwand oder einer Bodenfläche der Werkzeugform eine bestimmte Vertiefung in Punktform darstellt, wohingegen ein heller Punkt des zweidimensionalen Codemusters eine Erhebung oder einen Flächenbereich ohne Vertiefung in dem dreidimensionalen Codemuster auf den zweiten Oberflächen der Außenseiten bzw. den seitlichen Wandflächen oder der Bodenfläche der Werkzeugform wiedergibt.

Ein hierfür notwendiges Ablatieren, beziehungsweise Schmelzen oder Eingravieren kleinster Codemuster in die Oberfläche der Innenflächen der Werkzeugform, die in der Regel aus Metall sind, oder in entsprechend eingelegte Einsätze, die in der Regel auch aus Metall sind, findet mittels eines Lasergerätes mit einem oder mehreren Laserstrahlen statt. Diese Laserstrahlen können punktuell die Oberflächen derart erwärmen und gegebenenfalls eine Ablation, insbesondere einen Schmelzvorgang durchführen und auf kleinstem Raum Codemuster, zum Beispiel in quadratischer Form, wie man es von QR-Codes kennt, an den zweiten Oberflächen in dreidimensionaler Form erzeugen. Bei einem anschließenden Tiefziehvorgang wird das rigide Kunststoffmaterial gegen diese Bereiche der Werkzeugform oder dessen Einsätze derart gedrückt, dass sich in dem Kunststoffmaterial an der Außenseite der Verpackungsbehälters das Muster des dreidimensionalen Codes einprägt und aufgrund der Vielfachverwendung an verschiedensten Positionen der Außenseite des Verpackungsbehälters vorhanden ist. Ein derartiges Behandeln der Oberflächen der Werkzeugform mittels Laserstrahlen ist nicht einfach zu praktizieren und durchzuführen, da die Gefahr besteht, bei derartigen Laserbehandlungen unerwünschte Erhebungen in den Randbereichen von den beispielsweise lochartigen Vertiefungen, deren Form so gewünscht ist, zu verursachen. Lange Versuchsreihen der Anmelderin haben Lösungen gezeigt, wie die Erhebungen und Vertiefungen bearbeitet werden können, um langfristig ein konstantes Ergebnis im Formprozess und resultierender Codierung zu erzielen.

Sofern bei dem verwendeten Herstellungsverfahren zur Herstellung von formstabilen Verpackungsbehältern oder eines zugehörigen Bestandteiles aus kunststoff- und/oder papierbasierenden Materialzusammensetzungen nicht ein Spritzgießverfahren, ein Blasformverfahren oder dergleichen angewendet wird, sondern als Thermoformverfahren ein Tiefziehverfahren verwendet wird, ist Folgendes zu sagen:
Der Tiefziehvorgang kann beispielsweise durch Unterdruck oder Stempel, beziehungsweise auch Überdruck unterstützt werden, um ein schnellstmögliches Umformen eines folienförmigen, flachen Kunststoffmaterials in eine Endform der eigentlichen Schale des Verpackungsbehälter oder eines zugehörigen Bestandteils sicherzustellen.

Der Code kann in identischer Form beliebig oft auf Wand- und Bodenseiten des Verpackungsbehälters oder eines zugehörigen Bestandteils aufgebracht werden, um dadurch eine Verteilung des Codes über die späteren seitlichen Wandelemente, bzw. äußeren Wandflächen, bzw. auf den ersten Oberflächen der Außenseiten des Verpackungsbehälters und auch die äußere Bodenfläche, zu erhalten. Auf diese Weise wird sichergestellt, dass der Verpackungsbehälter von jeder beliebigen Seite aus schnell und unkompliziert ausgelesen werden kann, wie es beispielsweise bei dem Bezahlen an der Kasse notwendig ist. Hierdurch wird Zeit gespart, da nicht erst langwierig nach einem Barcode auf einem Aufkleber der Verpackung gesucht werden muss.

Bei Verwendung von digitalen Wasserzeichen, die für den Betrachter unsichtbar oder nahezu unsichtbar oder auch sichtbar auf dem Behälter angebracht sind, kann zudem sichergestellt werden, dass zudem keine Fälschung eines Barcodes und von Barcodeinformationen stattfindet, da das digitale Wasserzeichen als solches nicht unmittelbar wahrnehmbar ist. Jedoch können derartige digitale Wasserzeichen von herkömmlichen Lesegeräten unkompliziert ausgelesen werden. Insbesondere ist hierbei zu betonen, dass zweidimensional agierende und lesende Auslesegeräte dazu in der Lage sind, den erfindungsgemäß aufgebrachten dreidimensionalen Code an der Außenseite des Verpackungsbehälters zu lesen.

Zum Auslesen der Daten des digitalen Wasserzeichens müssen zugehörige Daten, z.B. in einer Cloud, hinterlegt werden.

Für eine Verbesserung der Unsichtbarkeit des digitalen Wasserzeichens kann das auf dem Verpackungsbehälter aufgebrachte Codemuster in seiner Auflösung und in seiner Erstreckung bzw. Ausdehnung hinsichtlich der Erhebungen, die aus den Vertiefungen der Werkzeugform bzw. der Werkzeugformeinsätze entstehen, derart optimiert werden, dass es sich in die ohnehin vorhandene Oberflächenrauigkeit der Oberfläche der Außenflächen des Verpackungsbehälters gewissermaßen integriert bzw. darin verschwindet und dadurch unsichtbar wird. Vorteilhaft ist hierbei auch die flächenmäßige Erstreckung des digitalen Wasserzeichens über die gesamte Außenfläche, beispielsweise einer seitlichen Wandfläche des Verpackungsbehälters oder einer Bodenfläche hinweg, sodass kein Unterschied zu einer nicht codierten Außenfläche des Verpackungsbehälters gesehen werden kann. Auch in den Eckbereichen des Verpackungsbehälters ist die Anbringung eines digitalen Wasserzeichens denkbar. Das rechteckige Codemuster kann somit digital an eine Verpackungsbehälterkontur angepasst bzw. gepatcht werden. Somit wird das Codemuster abhängig von der Geometrie der Verpackungsbehälterkontur verzerrt, indem es an die Kontur angepasst wird. Dies kann datentechnisch dadurch erfolgen, dass 3-D-Daten des Verpackungsbehälters dazu verwendet werden, die entsprechende Verzerrung des rechteckigen Codemusters zum Übertragen auf Teile oder die Gesamtheit des Verpackungsbehälters zur Anpassung an seine Kontur während der Datenerrechnung mitverwendet werden. Somit wird bei der Umwandlung der Daten eines 2-D-Codes in ein 3-D-Codemuster eine Art von dreidimensionaler Textur erhalten.

Es findet also zunächst eine Umwandlung von Daten eines zweidimensionalen Codemusters in Daten eines dreidimensionalen Codemusters statt und anschließend wird bei einem Auslesevorgang, wenn dieser erwünscht ist, wie zum Beispiel im Rahmen eines Recyclingvorganges, wiederum eine Umwandlung eines dreidimensionalen Codemusters in Daten eines zweidimensionalen Codemusters durchgeführt. Diese Daten können dann wiederum dazu verwendet werden, um beispielsweise eine gezielte Aussortierung dieser Behälter mit dem bestimmten Material und dem bestimmten Hersteller auf einem Sortierband zu bewirken. Dies kann sogar dann erfolgreich erreicht werden, wenn der Behälter bereits zerknittert beziehungsweise zerstört worden ist, da aufgrund der Vielzahl von aufgebrachten Codes an der Außenseite des Verpackungsbehälters an vielen verschiedenen Positionen es nahezu immer möglich ist, erfolgreich einen Lesevorgang und eine Umwandlung in Daten eines zweidimensionalen Codemusters durchzuführen. Somit können gezielt aussortierte Behälter eines bestimmten Herstellers und mit einem bestimmten Material zur Herstellung eines qualitativ hochwertigen Recyclats verwendet werden. Bei derartigen Sortiervorgängen ist es auch möglich, Lebensmittel- von Nichtlebensmittelverpackungsmaterialien zu trennen bzw. zu sortieren, um diese, auch speziell bei Lebensmittelverpackungsmaterialien, in einen Materialkreislauf zurückzubringen und durch geeignete Verarbeitungsprozesse eine neue Lebensmittelverpackung daraus herzustellen.

Die Verwendung von digitalen Wasserzeichen ermöglicht es somit, dass - selbst wenn der Verpackungsbehälter nach erfolgter Benutzung zerstört im Abfall landet - aufgrund deren Verteilung über den Verpackungsbehälter hinweg und deren dauerhaften Einbringung in das Verpackungsbehältermaterial, also in das steife Kunststoffmaterial oder einem papierbasierenden Material, ein Erkennen für den sich anschließenden Recyclingvorgang möglich ist. Hierbei können sowohl das Material, wie beispielsweise PP, PE, PET, rPET etc., als auch die Herkunft, der Herstellungsort, die Herstellungsart, die Verpackungsbehälterinhaltsinformation, die GTIN-Nummer, die SKU-Nummer etc. ausgelesen werden, um den Verpackungsbehälter gezielt beispielsweise einem bestimmten Recyclingkreislauf zu unterwerfen und zukommen zu lassen, sodass anschließend wieder neue Behälter aus dem Recyclingmaterial mit genau dieser Substanz hergestellt werden können. Somit können auslesbare Daten, die in dem Wasserzeichen enthalten sind, für eine Identifizierung des Materials und des Verpackungsbehälters oder dessen Bestandteile an sich dazu genutzt werden, im Recyclingverfahren entsprechend kategorisiert und sortiert zu werden. Die Daten, welche in dem Wasserzeichen zu entnehmen sind in Form eines Auslesevorganges, lassen Rückschlüsse über das Unternehmen geben, welches die Verpackungsbehälter in Verkehr gebracht hat, welches Abfallunternehmen beteiligt war, wer im Recyclingvorgang beteiligt war, welche Sortiereinheit aktiv daran beteiligt war und welche Kontrollorgane während des Recyclingvorganges, des Herstellungsvorganges und/oder des Befüllungsvorganges von dem Verpackungsbehälter beteiligt waren.

Als papierbasierende Materialien sind Papierverbund-Zellstoffe und Zellstoffverbunde und deren Mischungen denkbar.

Zudem kann die Verwendung von digitalen Wasserzeichen dem Käufer beziehungsweise dem Benutzer Informationen über den Verpackungsinhalt und sonstige Daten zu dem Lebensmittelhersteller geben, indem dieser mit einer Smartphone App ganz einfach irgendwo einen Abschnitt der Wandfläche des Verpackungsbehälters oder des Bodens abscannt beziehungsweise ausliest.

Die bereits erwähnten, bei der zweiten Formveränderungsbehandlung entstehenden Vertiefungen der Werkzeugform beziehungsweise der Oberflächen von Einsätzen, die in eine derartige Werkzeugform eingesetzt werden, sind als die bei der ersten Formveränderungsbehandlung entstehenden Erhebungen ausgebildet. Auf diese Art und Weise wird durch einen Negativformeffekt das dreidimensionale Codemuster auf die Außenflächen des Verpackungsbehälters in vielfacher Form und gegebenenfalls in identischer Form übertragen.

Vorzugsweise werden die Positionen der Mehrzahl an Codes derart ausgewählt, dass sie sich auf den äußeren Wandflächen und/oder auf eine äußere Bodenfläche des tiefgezogenen Verpackungsbehälters verteilen. Hierbei sind die digitalen Wasserzeichen aus quadratischen Anordnungen von kleinen Punkten bestehend, wobei die quadratischen Anordnungen in unterschiedlichen Größenabmaßen auf demselben Verpackungsbehälter vorhanden sein können. Selbstverständlich können derartige digitale Wasserzeichen jede andere Art von Formen, wie beispielsweise die Form eines Kreises, eines Dreiecks, oder eines Rechteckes ohne gleiche Seitenlängen aufweisen.

Ein Verpackungsbehälter oder ein zugehöriger Bestandteil aus einer auf kunststoff- und/oder papierbasierenden Materialzusammensetzung, der für die Aufbewahrung von Konsumgütern geeignet ist, weist also vorteilhaft mindestens an einer Außen- und/oder Innenseite des Verpackungsbehälter mindestens ein digitales Wasserzeichen auf, das während eines formbildenden Prozesses zur Bildung des dreidimensionalen Verpackungsbehälters oder des zugehörigen Bestandteils an mindestens einer Position durch die Oberfläche der Außen- und Innenseiten einwirkenden Formveränderungsbehandlung aufgebracht ist. Dies findet während des bereits erwähnten formbildenden Prozesses zur Bildung des dreidimensionalem Verpackungsbehälters ohne Verzögerung in dem Gesamtprozessablauf zur Herstellung des Verpackungsbehälters an einer Position oder einer Mehrzahl an Positionen statt.

Mitentscheidend für die Erkennbarkeit eines digitalen Wasserzeichens an der Oberfläche von Außenflächen des Verpackungsbehälters ist auch die Auflösung der zur Verfügung gestellten zweidimensionalen Signaldaten zur Umwandlung in 3-D-Daten, sodass mehr oder weniger exakt umrissene Erhebungen auf den Außenflächen des Verpackungsbehälters entstehen.

Weitere vorteilhafte Ausführungsformen ergeben sich aus den Unteransprüchen. Nachfolgend wird ein bevorzugtes Ausführungsbeispiel im Zusammenhang mit der Zeichnung beschrieben.

Hierbei zeigen:
- Fig. 1: seitliche Darstellung des fertigproduzierten Verpackungsbehälters mit der erfindungsgemäßen Codierung;
- Fig.2: die Aufnahme eines Bodenbereiches des erfindungsgemäßen Verpackungsbehälters mit der erfindungsgemäßen Codierung;
- Fig.3: in einer Draufsicht verschiedene Werkzeugformeinsätze zur Herstellung von dreidimensionalen Codes an der Außenfläche eines Verpackungsbehälters gemäß dem erfindungsgemäßen Verfahren;
- Fig.4: in einer seitlichen Querschnittsdarstellung eine Tiefziehform mit dem plattenförmigen flachen Grundstoffmaterial in erfindungsgemäßer codierter Form;
- Fig.5: in einer Querschnittsdarstellung die Form mit dem Kunststoffmaterial in erfindungsgemäßer codierter Form;
- Fig.6: Mikroskopaufnahme eines Ausschnitts eines dreidimensionalen Codes, wie er gemäß dem erfindungsgemäßen Verfahren auf eine Oberfläche der Werkzeugform in Innenbereich oder auf dessen Einsätzen eingebracht worden ist beziehungsweise eingraviert worden ist;
- Fig.7: eine schematische Darstellung verschiedener Einrichtungen zur Umwandlung und Einbringung von Codierdaten mittels eines Lasergeräts nach dem erfindungsgemäßen Verfahren.

Nachfolgend wird von allen in Frage kommenden formbildenden Prozessen zur Bildung des dreidimensionalen Verpackungsbehälters aus kunststoff- und/oder papierbasierenden Materialzusammensetzungen, beispielhaft das Tiefziehverfahren für die Herstellung eines Verpackungsbehälters aus einem folienförmigen bzw. ursprünglich plattenförmigen flachen Kunststoffmaterial näher in seinem Herstellungsprozess betrachtet:

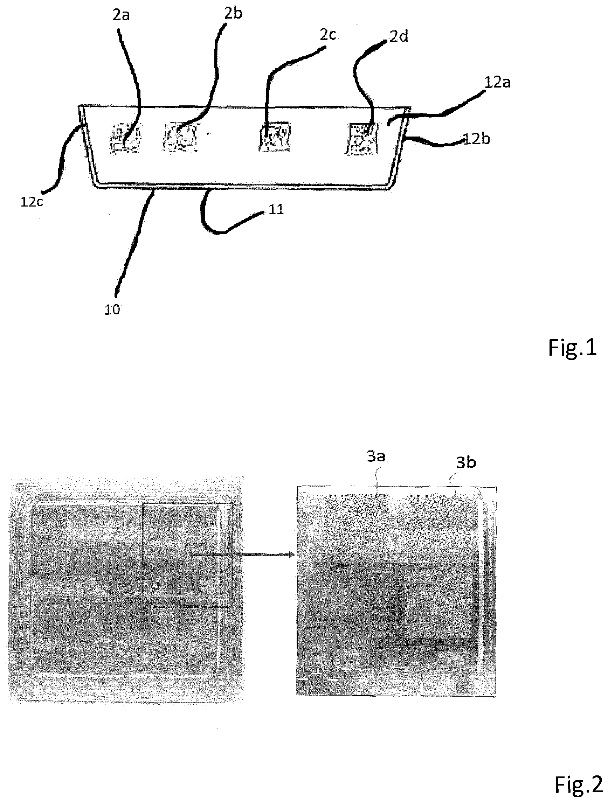

Fig. 1 zeigt einen seitlich dargestellten fertig hergestellten Verpackungsbehälter 10, der im oberen Bereich noch offen ist und mit einem Deckel abgedeckt werden könnte. Dieser Darstellung ist deutlich zu entnehmen, dass die nahezu unsichtbaren Wasserzeichen 2a, 2b, 2c und 2d auf einer seitlichen vorderen Wandfläche 12a, beziehungsweise außenseitigen Außenfläche angeordnet sind. Weitere hier nicht darstellbare Wasserzeichen sind auf der rechten und der linken seitlichen Wandfläche 12b und 12c angeordnet. Dies trifft auch auf eine hintere Wandfläche, die hier nicht dargestellt werden kann, zu. Auf einer Bodenfläche 11 des Verpackungsbehälter 10 sind ebenso Wasserzeichen außenseitig angeordnet. Diese entsprechen den Wasserzeichen 3a, 3b, wie sie beispielsweise in Fig.2, welche die Fotografie eines real hergestellten Kunststoffbehälters, beziehungsweise eines Verpackungsbehälters wiedergibt, dargestellt sind. Diese quadratisch ausgebildeten digitalen Wasserzeichen 3a und 3b können entweder zweifach oder vierfach oder auch in mehrfacher Form auf dem Bodenbereich beziehungsweise der Außenseite der Bodenfläche angeordnet sein. Auf diese Weise ist zuverlässig ein sicheres, gezieltes und schnelles Abscannen von Informationen des Behälters möglich.

Somit ist dieser Darstellung gemäß Fig.1 deutlich zu entnehmen, dass aufgrund der guten Verteilung sämtlicher digitaler Wasserzeichen, die unterschiedliche Abstände aufweisen können, ein Auslesen von Informationen von jeder Position aus möglich ist. Dies kann schnell und unkompliziert erfolgen.

Die Verteilung der Wasserzeichen kann beispielsweise derart sein, dass ein Verpackungsbehälter mit im Wesentlichen quadratischer Grundflächenform quadratisch ausgebildete digitale Wasserzeichen auf jeder seitlichen Wandfläche aufweist. An seiner Unterseite, also der Bodenfläche, könnten es zwei etwas größer ausgestaltete digitale Wasserzeichen oder auch vier Wasserzeichen, wie in Fig.2 wiedergegeben, sein.

Der Abstand von derartigen digitalen Wasserzeichen könnte beispielsweise im seitlichen Wandflächenbereich derart ausgebildet sein, dass zwischen jedem digitalen Wasserzeichen nur ein schmaler Rand von 2 - 5 mm vorliegt. Die Wasserzeichen könnten in quadratischer Form mit einer Kantenlänge von z.B. 10 - 30 mm nicht nur nebeneinander, sondern auch zweireihig oder dreireihig übereinander an den seitlichen Wandflächen angeordnet sein.

Alternativ kann an Stelle einer Verteilung einzelner Wasserzeichen über eine Seitenwandfläche und/oder eine Bodenfläche auch eine vollflächige Anbringung der Wasserzeichen über eine gesamte Seitenwandfläche oder eine gesamte Bodenfläche oder einfach über sämtliche Wand- und Bodenflächen hinweg gewählt werden. Dies sollte in Abhängigkeit von der Geometrie der Verpackung derart geschehen, dass insbesondere in den Rand- und Eckbereichen ein Auslesen nicht unmöglich wird. Bei einem Auslesevorgang des Wasserzeichens in einer Recyclinganlage muss dann nur ein kleiner Anteil des gesamtflächigen Wasserzeichens ausgelesen bzw. von der Leseanlage gefunden werden.

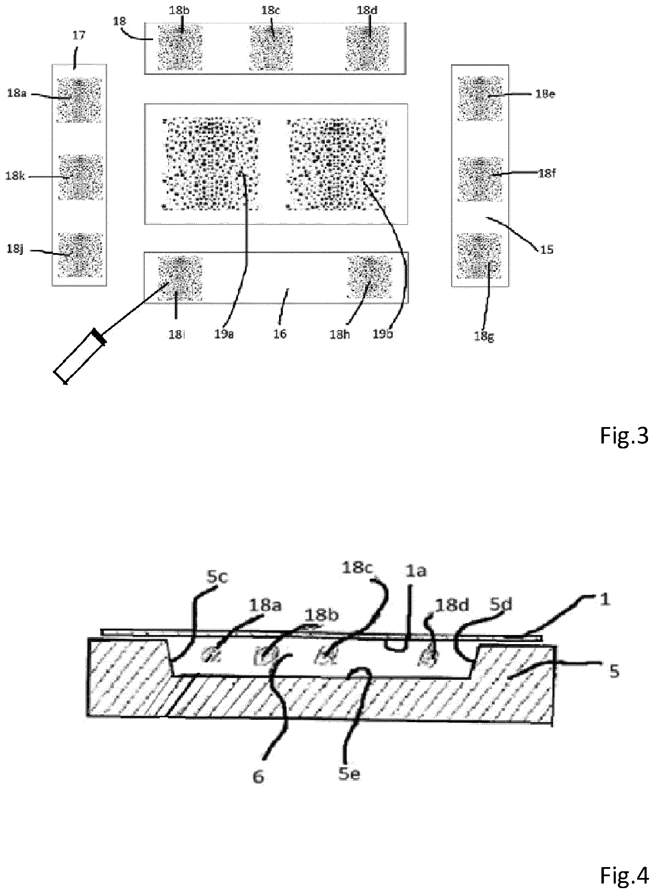

In Fig.3 ist in einer Draufsicht ein Werkzeugformeinsatz dargestellt, der nach erfindungsgemäßem Verfahren aufgebrachte, beziehungsweise eingearbeitete 3D-Codes 18a - 18k aufweist. Der Werkzeugformeinsatz ist zur vereinfachten besseren Darstellung in einer fiktiven aufgeklappten Form wiedergegeben, sodass in dieser Draufsicht sämtliche Innenseiten und der innere Bodenbereich getrennt voneinander zu sehen sind. Ein Lasergerät 4 mit Laserstrahlen 4a kann derart gestaltet werden, dass viele kleine Punkte an unterschiedlichen Orten, beispielsweise in Form eines Quadrates angeordnet werden, wobei diese Punkte durch ihre Anordnung eine gewisse Information aufgrund ihrer Anordnungsposition und aufgrund ihrer Tiefe in das Material im Bereich der Oberflächen enthalten.

Derartige quadratförmige Codierungen können als Muster bei der hier gezeigten Werkzeugform eingesetzt werden, beispielsweise entlang des seitlichen Wandbereiches, welcher durch die Formeinsatzseitenflächen 15, 16, 17 und 18 gebildet wird, und somit später für die seitlichen Wandflächen des fertigen Verpackungsbehälters zuständig sind. Diese dreidimensionalen Codemuster können mit gleichen oder unterschiedlichen Abständen und auch in unterschiedlicher Größe angeordnet sein. Dies wird durch die 3D-Codes 18a, 18b, 18c, 18d, 18e - k wiedergegeben.

Zusätzlich oder alternativ können auch im Bereich der späteren Bodenfläche des Verpackungsbehälters digitale Wasserzeichen angeordnet werden. Dies wird dadurch erreicht, dass die der Bodenfläche zugeordnete Formeinsatzbodenfläche 19 beispielsweise eingearbeitete dreidimensionale Codes 19a und 19b aufweist, die wiederum als digitales Wasserzeichen ausgebildet sein können. Diese können beispielsweise in ihrer Größenabmessung eine größere Seitenlänge eines Quadrats gegenüber den Codes 18a - k aufweisen. Diese bodenseitigen angeordneten digitalen Wasserzeichen werden mit dem Bezugszeichen 19a, 19b bezeichnet.

In Fig.4 wird in einer Querschnittsdarstellung eine Tiefziehform 5 mit einer Negativaussparung 6 dargestellt, wobei diese negative Aussparung 6 die äußere Form des Verpackungsbehälters, der tiefzuziehen ist, wiedergibt.

Das plattenförmige flache Kunststoffmaterial wird mit seiner ersten Seite 1a verkehrt herum auf die Tiefziehform 5 gelegt.

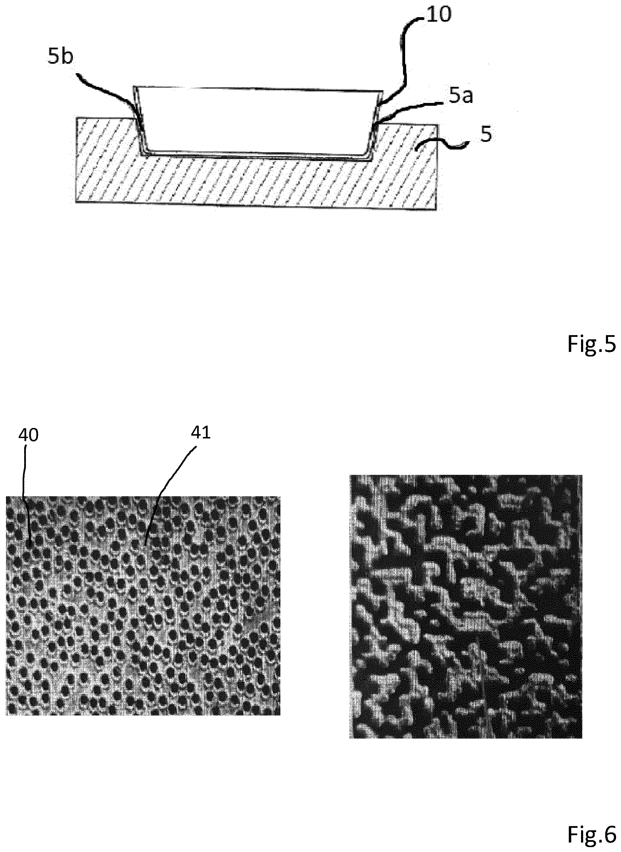

Anschließend findet wie in Fig.5 dargestellt, der eigentliche Tiefziehvorgang statt. Hierbei wird das plattenförmige Kunststoffmaterial 1 durch Unterdruck oder auch durch Überdruck oder einem von oben einwirkendem Stempel in die Aussparung 6 der Form hineingepresst, indem das Material entlang der Kanten 5a und 5b nach unten gezogen wird. Hierbei ist darauf zu achten, dass keine Beschädigung der Außenfläche des zu produzierenden Verpackungsbehälters stattfindet. Beim Hinunterziehen, beziehungsweise beim Tiefziehen des Kunststoffmaterials 1 findet zugleich ein Anpressen der dadurch entstehenden seitlichen Flächen 12a, 12b, 12c und einer Bodenfläche 11 und gegebenenfalls weiterer Flächen des Verpackungsbehälters an die seitlichen Innenwände der Werkzeugform statt, wobei diese Wände ebenso wie die Bodenfläche der Werkzeugform mit Formeinsatzseitenflächen und - bodenflächen 15, 16, 17 18 und 19 versehen sein können, wie sie in Fig.3 dargestellt waren. Diese Formeinsatzflächen wiederum zeichnen sich - wie bereits beschrieben - durch gezielte minimalste Vertiefungen in das Plattenmaterial, welches Metall sein kann, zur Darstellung der 3-D-Codes aus. Diese Codes prägen dann während des Tiefziehvorganges eine Außenoberfläche des späteren Verpackungsbehälters derart, dass der Code auf die Außenfläche übertragen wird, jedoch nach wie vor aufgrund der geringen Erstreckung in drei Dimensionen in die dritte Dimension nahezu unsichtbar bleibt.

Die Innenseiten der Werkzeugform bzw. die hier nicht näher dargestellten Formeinsatzflächen innerhalb der Werkzeugform werden mit 5c, 5d und der Bodenbereich mit 5e bezeichnet.

In Fig.6 ist in einer mikroskopischen Ausschnittsdarstellung ein Bereich von aufgebrachten dreidimensionalen Codes an der Innenseite der Werkzeugform aus Metall oder an Metalleinsätzen, die in die Werkzeugform eingesetzt werden, wiedergegeben. Dieser Darstellung ist zu entnehmen, dass minimalste punktähnliche Vertiefungen 40 mit einer bestimmten Tiefe vorhanden sind, die beispielsweise im Bereich von 1 µm - 50 µm, vorzugsweise 5 - 50µm, liegen können. Zwischen diesen punktförmigen Vertiefungen sind unveränderte Bereiche 41 vorhanden, die entsprechend bei einem zweidimensionalen Code dem weißen Flächenanteil zwischen schwarzen Punkten zuzuordnen wären.

Da die Metalleinsätze oder Innenseiten der Werkzeugform selbst nun Vertiefungen an ihren Oberflächen aufweisen, werden bei dem sich anschließenden Tiefziehvorgang eines Kunststoffmaterials in die Werkzeugform hinein die ersten Oberflächen der Außenflächen des zu produzierenden Verpackungsbehälters, also die seitlichen Wandflächen und die Unterseite des Verpackungsbehälters, an diesen Stellen Erhebungen erhalten, um hierdurch ein digitales Wasserzeichen auf den ersten Oberflächen der Außenflächen und der Bodenfläche des Verpackungsbehälters zu erhalten. Derartige Erhebungen können sich in einem Bereich von 1 - 30 µm bewegen. Im Bezug auf eine Gesamtwandstärke der seitlichen Wandflächen und auch der Bodenfläche sind diese Erhebungen äußerst gering und deshalb kaum wahrnehmbar. Denn übliche Wandstärken, die von der Geometrie des Produktes, also beispielsweise der Form eines Trinkbechers oder der Form eines Trays abhängen, liegen bei 250 µm - 600 µm, vorzugsweise 300 µm - 500 µm. Zudem hängen die Wandstärken von dem verwendeten Kunststoffmaterial und der Position an der Außenfläche ab, da bei dem Tiefziehvorgang üblicherweise die Wandstärke im oberen Bereich des so erhaltenden Behälters größer ist als im mittleren Bereich der Seitenwände. Zu den Eckradien des Behälters hin wird die Wandstärke dann wieder größer. Im unteren Bereich, der an die Bodenfläche angrenzt, sowie in dem Bodenflächenbereich selbst ist eine Wandstärke vorhanden, die nahe der Ausgangsstärke des folienartigen Materials, abhängig vom Tiefziehverhältnis, der Stempelgeometrie, der Produktkontur etc., liegt. Im Übrigen kann auch die Art des digitalen Wasserzeichens bzw. des Digicodes den Wanddickenaufbau hinsichtlich der Wandflächen beeinflussen.

Auf der rechten Seite dieser Darstellung gemäß Fig.6 ist auch eine weitere mögliche Ausgestaltung eines Codes, wie er mittels eines Lasergeräts in die Metalloberflächen eingebracht werden kann, zu sehen. Diese Form des Codes ist häufig bei QR-Codes zu sehen.

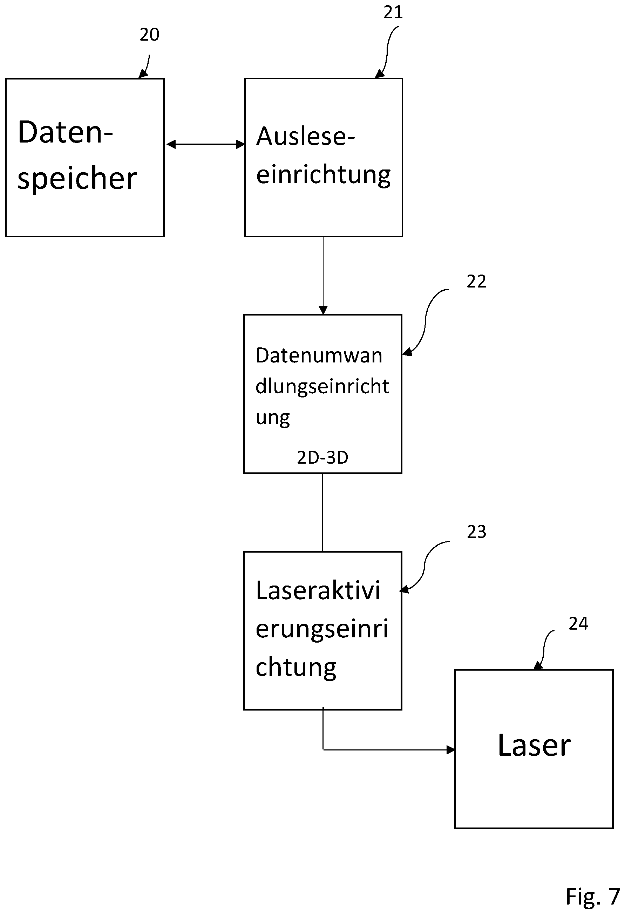

In Fig.7 ist in einem Verfahrensablauf nochmals kurz, dem erfindungsgemäßen Verfahrens entsprechend, die Umwandlung von zweidimensionalen gespeicherten Codedaten in dreidimensionale Codedaten wiedergegeben.

Es sind Daten zu einem zweidimensionalen Code, wie sie beispielsweise von Codeerzeugungseinrichtungen generiert werden, abgespeichert. Auf diesen Datenspeicher 20 greift eine Ausleseeinrichtung 21 zu, die nach Start eines Laserbehandlungsvorganges die Daten aus dem Datenspeicher ausliest und an eine Datenumwandlungseinrichtung 22 weitergibt.

Diese soll eine Umwandlung der bisher vorliegenden elektronischen zweidimensionalen Daten für ein zweidimensionales Codemuster in Daten für ein dreidimensionales Codemuster herbeiführen. Das heißt, es werden dunkle und helle Bereiche in dem zweidimensionalen Codemuster in verschieden tiefe Flächenanteile innerhalb der Oberfläche einer Werkzeugform oder dazugehöriger Formeinsätze umgewandelt.

Eine Laseraktivierungseinrichtung 23 erhält dann einen Aktivierungsbefehl, um die Daten des dreidimensionalen Codemusters mit Hilfe eines Lasergerätes 24 dann in die Oberflächenwerkzeugform bzw. die Werkzeugformeinsätze einzubringen.

Auch bei der Anwendung anderer Herstellungsverfahren von formstabilen Kunststoffverpackungen, bei denen formgebende Werkzeuge benutzt werden, wie beispielsweise Spritzgießverfahren oder Blasformprozesse, ist die Anwendung des erfindungsgemäßen Codierverfahrens ohne weiteres möglich und denkbar. Denn eine Einbringung eines dreidimensionalen Codes in eine Werkzeugform, beispielsweise für den Spritzblasvorgang eines Verpackungsbehälters, kann in ähnlicher Weise mit Hilfe eines Lasergeräts stattfinden, wie es bei dem zuvor beschriebenen Tiefziehverfahren beschrieben worden ist. Auch können hierzu Formeinsätze verwendet werden. Das fertige spritzgeblasene Produkt in Form eines Verpackungsbehälters oder eines dazugehörigen Bestandteils, wie eines Deckels, kann an seinen Außenflächen, beispielsweise eine Vielzahl von über die Oberfläche verteilter, nahezu unsichtbarer oder sichtbarer Wasserzeichen aufweisen, die jederzeit, insbesondere auch in einem Aussortiervorgang mit ihrer Information ausgelesen werden können. Dies ermöglicht auch bei derartig hergestellten Verpackungsbehältern das gezielte Aussortieren im Rahmen eines Recyclingprozesses, sodass diese Verpackungen wiederum nach einem erfolgten Sortiervorgang gezielt einem für dieses bestimmte Material und diese Art von Verpackung vorgesehenen Recyclingvorgang zugeordnet werden können und somit zur Herstellung neuer Produkte wiederverwendet werden können. Sichergestellt ist auf jeden Fall dadurch, dass immer die Verpackungen eines bestimmten Herstellers - sofern gewünscht - gezielt aussortiert werden. Selbst wenn die Verpackung im zerstörten Zustand auf einer Müllentsorgungsstation liegen würde, kann ein in diesem Bereich angeordnetes Auslesegerät diesen Verpackungsbehälter aussortieren und zuordnen, da nicht nur ein Wasserzeichen, sondern eine Vielzahl von Wasserzeichen auf der Verpackung aufgebracht sind. Auch besteht nicht die Gefahr, dass diese Wasserzeichen entfernt wurden, da weder Aufklebewasserzeichen noch aufgedruckte Wasserzeichen verwendet worden sind.

### Bezugszeichenliste

- 1: plattenförmiges flaches Kunststoffmaterial
- 1a: Seite
- 2a: dreidimensionale Codes, digitales Wasserzeichen
- 2b: dreidimensionale Codes, digitales Wasserzeichen
- 2c: dreidimensionale Codes, digitales Wasserzeichen
- 2d: dreidimensionale Codes, digitales Wasserzeichen
- 3a: dreidimensionale Codes, digitales Wasserzeichen
- 3b: dreidimensionale Codes, digitales Wasserzeichen
- 4: Lasergerät
- 4a: Laserstrahlen
- 5: Werkzeugform, Tiefziehform
- 5a: Kante
- 5b: Kante
- 5c: Platteneinsatz, Formeinsatz innerhalb der Werkzeugform
- 5d: Platteneinsatz, Formeinsatz innerhalb der Werkzeugform
- 5e: Bodenfläche der Werkzeugform
- 6: Negativaussparung
- 10: Verpackungsbehälter
- 11: Bodenfläche
- 12a: vordere seitliche Wandfläche/Außenseite
- 12b: rechte seitliche Wandfläche/Außenseite
- 12c: linke seitliche Wandfläche/Außenseite
- 15: Formeinsatzseitenfläche
- 16: Formeinsatzseitenfläche
- 17: Formeinsatzseitenfläche
- 18: Formeinsatzseitenfläche
- 18a: dreidimensionale Codemuster
- 18b: dreidimensionale Codemuster
- 18c: dreidimensionale Codemuster
- 18d: dreidimensionale Codemuster
- 18e: dreidimensionale Codemuster
- 18f: dreidimensionale Codemuster
- 18g: dreidimensionale Codemuster
- 18h: dreidimensionale Codemuster
- 18i: dreidimensionale Codemuster
- 18j: dreidimensionale Codemuster
- 18k: dreidimensionale Codemuster
- 19: Formeinsatzbodenfläche
- 19a: bodenseitig angeordnetes digitales Wasserzeichen
- 19b: bodenseitig angeordnetes digitales Wasserzeichen
- 20: Datenspeicher
- 21: Ausleseeinrichtung
- 22: Datenumwandlungseinrichtung
- 23: Laseraktivierungseinrichtung
- 24: Lasergerät
- 40: Oberflächenvertiefungen
- 41: Oberflächenerhebungen

## Patentansprüche

1. Verfahren zum Codieren eines formstabilen Verpackungsbehälters oder eines zugehörigen Bestandteils aus einer auf kunststoff- und/oder papierbasierenden Materialzusammensetzung, wobei der Verpackungsbehälter für die Aufbewahrung von Konsumgütern, wie Lebensmittel, Waschmittel etc. geeignet ist,
wobei während eines formbildenden Prozesses zur Bildung des dreidimensionalen Verpackungsbehälters oder des zugehörigen Bestandteils mit einer formgebenden Werkzeugform (5) mindestens eine Außen- und/oder Innenseite (12a, 12b, 12c) an mindestens einer Position eine auf ihre erste Oberfläche einwirkende Formveränderungsbehandlung zur Herstellung mindestens eines dreidimensionalen Codes (2a - d; 3a, 3b) in Form eines digitalen Wasserzeichens (2a - d; 3a, 3b) erfährt,
**dadurch gekennzeichnet, dass**
das dreidimensionale Codemuster (18a - 18k; 19a, 19b) mittels eines Gerätes für ein kontaktfreies Bearbeitungsverfahren, wie eines Lasergerätes (4; 24), in zweite Oberflächen) der Werkzeugform (5) oder darin anordenbarer Formeinsätze (15, 16, 17, 18, 19) derart eingearbeitet wird, dass bei einer weiteren Formveränderungsbehandlung die Oberflächenvertiefungen (40) und/oder-erhebungen (41) in Form von kleinsten Punkten oder anderen kleinsten Querschnittsflächen in der zweiten Oberfläche enthalten sind,
wobei bei weiteren Formveränderungsbehandlungen entstehende Oberflächenvertiefungen (40) und/oder -erhebungen (41) komplementär zu bei der Formveränderungsbehandlung entstehenden Oberflächenvertiefungen (40) und/oder-erhebungen (41) ausgebildet sind

2. Verfahren nach Anspruch 1,
**dadurch gekennzeichnet, dass**
in einem vorausgehenden Verfahrensschritt Daten von mindestens einem zweidimensionalen Codemuster mittels einer Datenumwandlungseinrichtung (22) in Daten eines dreidimensionalen Codemusters unter Berücksichtigung einer Kontur des Verpackungsbehälters oder des zugehörigen Bestandteils umgewandelt werden.

3. Verfahren nach Anspruch 1 oder 2,
**dadurch gekennzeichnet, dass**
das Lasergerät (4; 24) mit einem oder mehreren Laserstrahlen (4a) punktuell die zweiten Oberflächen erwärmt und zur Ablation, insbesondere zum Schmelzen bringt.

4. Verfahren nach einem der vorangegangenen Ansprüche,
**dadurch gekennzeichnet, dass**
der formbildende Prozess zur Bildung des dreidimensionalen Verpackungsbehälters ein Tiefziehverfahren, ein Spritzgießverfahren, ein Blasformverfahren, ein Pressverfahren oder dergleichen für Kunststoffmaterialien, Papierzusammensetzungen und Mischungen daraus ist.

5. Verfahren nach einem der vorangegangenen Ansprüche,
**dadurch gekennzeichnet, dass**
kunststoff- oder papierbasierende Materialzusammensetzungen PP, PE, PET, rPET, r-PP, r-PE oder dergleichen oder Papierverbundstoffe in gepresster und ungepresster Form aus recyceltem oder nicht recyceltem Material, wie Papierverbund-Zellstoffe und Zellstoffverbunde oder Mischungen daraus verwendet werden.

6. Verfahren nach einem der vorangegangenen Ansprüche,
**dadurch gekennzeichnet, dass**
eine Mehrzahl an dreidimensionalen Codes (2a - d; 3a, 3b) auf dem Verpackungsbehälter (10) eine Mehrzahl an sich wiederholenden, vorzugsweise identischen digitalen Wasserzeichen (2a - d; 3a ,3b) darstellen, deren Existenz für den Betrachter nahezu unsichtbar oder sichtbar ist.

7. Verfahren nach Anspruch 6,
**dadurch gekennzeichnet, dass**
die Positionen der Mehrzahl an dreidimensionalen Codes (2a - d; 3a, 3b) derart ausgewählt werden, dass sie sich auf äußeren Wandflächen (12a, 12b, 12c) und/oder inneren Wandflächen und/oder auf einer äußeren Bodenfläche (11) des tiefgezogenen Verpackungsbehälters (10) verteilen.

8. Verfahren nach Anspruch 7,
**dadurch gekennzeichnet, dass**
die digitalen Wasserzeichen (2a - d; 3a, 3b) jeweils aus, vorzugsweise quadratischen, Anordnungen von unregelmäßig verteilten, zweidimensional betrachtet kleinsten Punkten und/oder anderen Flächenmustern und gegebenenfalls der Kontur des Verpackungsbehälters oder des Bestandteils angepasst verzerrt, bestehen, wobei die quadratischen Anordnungen unterschiedliche Größenabmaße auf demselben Verpackungsbehälter (10) aufweisen können.

9. Verfahren nach Anspruch 6, 7 oder 8,
**dadurch gekennzeichnet, dass**
die Mehrzahl an digitalen Wasserzeichen (2a - d; 3a, 3b) codierte Informationen zur Zusammensetzung des verwendeten Kunststoffmaterials, der Herstellungsart, Verpackungsbehälter, Inhaltsinformationen, GTIN-Nummern, SKU-Nummern und Informationen für den Verbraucher und/oder den Benutzer enthalten kann, auch zur weiteren Nutzung für ein Identifizierungsverfahren bei einem Sortier-, Trenn- und Recyclingverfahren.

10. Verpackungsbehälter oder ein zugehöriger Bestandteil aus einer auf kunststoff- oder papierbasierenden Materialzusammensetzung, der für die Aufbewahrung von Konsumgütern, wie Lebensmittel, Waschmittel etc. geeignet ist, hergestellt mit einem Codierverfahren nach einem der vorangegangenen Ansprüche,
**dadurch gekennzeichnet, dass**
mindestens eine Außen- und/oder Innenseite (12a, 12b, 12c) des Verpackungsbehälters (10) mindestens ein digitales Wasserzeichen (2a - d, 3a, 3b) aufweist, das während eines formbildenden Prozesses zur Bildung des dreidimensionalen Verpackungsbehälters oder des zugehörigen Bestandteils mit einer formgebenden Werkzeugform an mindestens einer Position durch eine auf eine erste Oberfläche der Außen- und Innenseiten einwirkende Formveränderungsbehandlung aufgebracht ist.

11. Verpackungsbehälter nach Anspruch 10,
**dadurch gekennzeichnet, dass**
das digitale Wasserzeichen (2a - d, 3a, 3b) rechteckförmig, vorzugsweise quadratisch ausgebildet ist und mit gleichen oder unterschiedlichen Größenabmessungen über den Verpackungsbehälter (10) in einer Mehrzahl verteilt sein kann.

## Claims

1. Method for coding a dimensionally stable packaging container or an associated part made of a plastic and/or paper-based material composition, wherein the packaging container being suitable for storing consumer goods, such as foodstuffs, detergents, etc.,
wherein during a shape-forming process for forming the three-dimensional packaging container or the associated part with a tool shape (5), at least one outer and/or inner side (12a, 12b, 12c) at at least one position undergoes a shape-shifting treatment acting on its first surface for producing at least one three-dimensional code (2a - d; 3a, 3b) in the form of a digital watermark (2a - d; 3a, 3b),
**characterized in that**
the three-dimensional code pattern (18a - 18k; 19a, 19b) by means of a device for a non-contact processing method, such as a laser device (4; 24), is worked into second surfaces of the tool shape (5) or mold inserts (15, 16, 17, 18, 19) which can be arranged therein in such a way that, in the case of a further shape shifting treatment, the surface depressions (40) and/or elevations (41) are contained in the second surface in the form of minute points or other minute cross-sectional areas,
wherein surface depressions (40) and/or elevations (41) formed during further shape shifting treatments are formed complementary to surface depressions (40) and/or elevations (41) formed during the shape shifting treatment.

2. Method according to claim 1,
**characterized in that**
in a preceding process step, data from at least one two-dimensional code pattern is converted by means of a data conversion means (22) into data of a three-dimensional code pattern, in consideration of a contour of the packaging container or of the associated part.

3. Method according to claim 1 or 2,
**characterized in that**
the laser device (4; 24) selectively heats the second surfaces with one or more laser beams (4a) and causes ablation, in particular melting.

4. Method according to any of the preceding claims,
**characterized in that**
the shape-forming process for forming the three-dimensional packaging container is a deep drawing process, an injection molding process, a blow molding process, a compression molding process or the like for plastic materials, paper compositions and mixtures thereof.

5. Method according to any one of the preceding claims,
**characterized in that**
plastic- or paper-based material compositions PP, PE, PET, rPET,r-PP, r-PE or the like or paper composites in pressed and unpressed form of recycled or non-recycled material, such as paper composite pulps and pulp composites or mixtures thereof are used.

6. Method according to any one of the preceding claims,
**characterized in that**.
a plurality of three-dimensional codes (2a - d; 3a, 3b) on the packaging container (10) constitute a plurality of repetitive, preferably identical digital watermarks (2a - d; 3a ,3b), the existence of which is almost invisible or visible to the viewer.

7. Method according to claim 6,
**characterized in that**
the positions of the plurality of three-dimensional codes (2a - d; 3a, 3b) are selected to be distributed on outer wall surfaces (12a, 12b, 12c) and/or inner wall surfaces and/or on an outer bottom surface (11) of the deep drawing packaging container (10).

8. Method according to claim 7,
**characterized in that**
the digital watermarks (2a - d; 3a, 3b) each consist of, preferably square, arrangements of irregularly distributed, two-dimensionally viewed smallest dots and/or other surface patterns and optionally distorted to match the contour of the packaging container or the part, wherein the square arrangements may have different size dimensions on the same packaging container (10).

9. The method of claim 6, 7, or 8,
**characterized in that**
the plurality of digital watermarks (2a - d; 3a, 3b) can contain coded information on the composition of the plastic material used, the manufacturing method, packaging containers, content information, GTIN numbers, SKU numbers and information for the consumer and/or the user, also for further use for an identification process in a sorting, separating and recycling process.

10. Packaging container or an associated part made of a plastic- or paper-based material composition suitable for storing consumer goods, such as food, detergents, etc., produced by a coding process according to any of the preceding claims,
**characterized in that**
at least one outer and/or inner side (12a, 12b, 12c) of the packaging container (10) comprises at least one digital watermark (2a - d, 3a, 3b), which during a shape-forming process for forming the three-dimensional packaging container or the associated part with a tool shape at least one position by a shape shifting treatment acting on a first surface of the outer and inner sides.

11. Packaging container according to claim 10,
**characterized in that**
the digital watermark (2a - d, 3a, 3b) is rectangular, preferably square, in shape and can be distributed in a plurality over the packaging container (10) with the same or different size dimensions.

## Revendications

1. Procédé de codage d'un récipient d'emballage dimensionnellement stable ou d'un composant associé fait d'une composition de matière à base de plastique et/ou de papier, le récipient d'emballage étant apte à la conservation de produits de consommation, tels que des aliments, des détergents, etc,
dans lequel, pendant un processus de formage pour former le récipient d'emballage tridimensionnel ou le composant associé au moyen d'un moule de formage (5), au moins un côté externe et/ou interne (12a, 12b, 12c) subit, dans au moins une position, un traitement de changement de forme agissant sur sa première surface pour produire au moins un code tridimensionnel (2a - d ; 3a, 3b) sous la forme d'un filigrane numérique (2a - d ; 3a, 3b),
**caractérisé par le fait que**
le motif de code tridimensionnel (18a - 18k ; 19a, 19b) est incorporé au moyen d'un appareil pour un procédé de traitement sans contact, tel qu'un appareil laser (4 ; 24), dans des secondes surfaces du moule de formage (5) ou d'inserts de moule (15, 16, 17, 18, 19) pouvant être disposés dans celui-ci, de telle sorte que, lors d'un autre traitement de changement de forme, les creux (40) et/ou bosses (41) de surface sont contenus dans la seconde surface sous la forme de petits points ou autres petites aires en coupe transversale,
des creux (40) et/ou bosses (41) de surface apparaissant lors d'autres traitements de changement de forme étant réalisés de manière complémentaire aux creux (40) et/ou bosses (41) de surface apparaissant lors du traitement de changement de forme.

2. Procédé selon la revendication 1,
**caractérisé par le fait que**,
dans une étape de procédé précédente, des données d'au moins un motif de code bidimensionnel sont converties au moyen d'un dispositif de conversion de données (22) en données d'un motif de code tridimensionnel en prenant en compte un contour du récipient d'emballage ou du composant associé.

3. Procédé selon l'une des revendications 1 ou 2,
**caractérisé par le fait que**
l'appareil laser (4 ; 24) chauffe ponctuellement les secondes surfaces avec un ou plusieurs faisceaux laser (4a) et les amène à subir une ablation, en particulier à fondre.

4. Procédé selon l'une des revendications précédentes,
**caractérisé par le fait que**
le processus de formage pour former le récipient d'emballage tridimensionnel est un processus de thermoformage, un processus de moulage par injection, un processus de moulage par soufflage, un processus de pressage ou similaires pour matières plastiques, compositions de papier et leurs mélanges.

5. Procédé selon l'une des revendications précédentes,
**caractérisé par le fait que**
l'on utilise des compositions de matière à base de plastique ou de papier PP, PE, PET, rPET, r-PP, r-PE ou similaires, ou des composites de papier sous forme pressée et non pressée à partir de matière recyclée ou non recyclée, telle que des pâtes à papier de papier composite et des composites de pâte à papier ou leurs mélanges.

6. Procédé selon l'une des revendications précédentes,
**caractérisé par le fait que**
plusieurs codes tridimensionnels (2a - d ; 3a, 3b) sur le récipient d'emballage (10) représentent plusieurs filigranes numériques répétitifs, de préférence identiques (2a - d ; 3a ,3b), dont l'existence est presque invisible ou visible pour l'observateur.

7. Procédé selon la revendication 6,
**caractérisé par le fait que**
les positions des différents codes tridimensionnels (2a - d ; 3a, 3b) sont choisies de telle sorte qu'elles se répartissent sur des surfaces de paroi externes (12a, 12b, 12c) et/ou sur des surfaces de paroi internes et/ou sur une surface de fond externe (11) du récipient d'emballage thermoformé (10).

8. Procédé selon la revendication 7,
**caractérisé par le fait que**
les filigranes numériques (2a - d ; 3a, 3b) consistent chacun, de façon à être le cas échéant déformés d'une manière adaptée au contour du récipient d'emballage ou du composant, en agencements, de préférence carrés, de points irrégulièrement répartis, qui sont petits dans une vue en deux dimensions, et/ou autres motifs de surface, les agencements carrés pouvant présenter des dimensions différentes sur le même récipient d'emballage (10).

9. Procédé selon l'une des revendication 6, 7 ou 8,
**caractérisé par le fait que**
les différents filigranes numériques (2a-d ; 3a, 3b) peuvent contenir des informations codées en ce qui concerne la composition de la matière plastique utilisée, le mode de fabrication, les récipients d'emballage, les informations sur le contenu, les numéros GTIN ("Global Trade Item Numbers"), les numéros de produit SKU et les informations pour le consommateur et/ou l'utilisateur, également pour une utilisation ultérieure pour une méthode d'identification dans un processus de tri, de séparation et de recyclage.

10. Récipient d'emballage ou composant associé, fait d'une composition de matière à base de plastique ou de papier, qui est apte à la conservation de produits de consommation, tels que des aliments, des détergents, etc., fabriqué par un procédé de codage selon l'une des revendications précédentes,
**caractérisé par le fait qu'**
au moins un côté externe et/ou interne (12a, 12b, 12c) du récipient d'emballage (10) présente au moins un filigrane numérique (2a-d, 3a, 3b), qui est appliqué pendant un processus de formage pour former le récipient d'emballage tridimensionnel ou le composant associé au moyen d'un moule de formage en au moins une position par un traitement de changement de forme agissant sur une première surface des côtés externes et internes.

11. Récipient d'emballage selon la revendication 10,
**caractérisé par le fait que**
le filigrane numérique (2a - d, 3a, 3b) est réalisé de forme rectangulaire, de préférence carrée, et peut être réparti sur le récipient d'emballage (10) en une pluralité avec les mêmes dimensions ou des dimensions différentes.
